# EUROPEAN PATENT APPLICATION

(11) **EP 1 739 062 A1**
(43) Date of publication of application: **03.01.2007**
(21) Application number: 05726719.7
(22) Date of filing: 18.03.2005
(51) Int. Cl.: C03B 18/06, C03B 18/04

(54) **METHOD OF MANUFACTURING FLOAT PLATE GLASS**

(30) Priority: 22.03.2004 JP 2004082205
(71) Applicant: CENTRAL GLASS COMPANY, LIMITED, Ube-shi, Yamaguchi-ken 755-0001 (JP)
(72) Inventor: TANISE, Nobuhisa, c/o Matsuzaka Plant of CENTRAL, Matsusaka-shi, Mie 515-0001 (JP); FUJIMOTO, Manabu, c/o Ube Plant of CENTRAL, Ube-shi, Yamaguchi 755-0001 (JP); KUNIMOTO, Yoshinobu, c/o Ube Plant of CENTRAL, Ube-shi, Yamaguchi 755-0001 (JP)
(74) Representative: Manitz, Finsterwald & Partner GbR
(86) International application number: PCT/JP2005/004971
(87) International publication number: WO 2005/090245

(57) **Abstract**

The present invention relates to a method of manufacturing float glass, which is **characterized in that** in a method of manufacturing float glass of a thickness from 0.1 to 3 mm, during a process of controlling a width of a glass ribbon by means of top rolls, a viscosity of the glass ribbon located at a position where the width of the glass ribbon becomes maximal ranges from 4.5 to 5.6 inclusive, and regarding at least three top rolls located downstream of the position where the width of the glass ribbon becomes maximal, when a distance (unit: mm) between adjacent two top rolls is L and when a variation (unit: mm) of the width directional end portion of the glass ribbon to the central direction of the glass ribbon, at the portion where the tension of the two top rolls is applied, is Δh, -0.1 ≤ Δh/L ≤ 0.4 is established.

## Description

### TECHNICAL FIELD

The present invention relates to a method of manufacturing float glass.

### BACKGROUND OF INVENTION

In manufacturing float glass, by floating molten glass material on a molten metal, the molten glass material naturally spreads and has a stable thickness as a result of equilibrium between the surface tensile and the gravity of the molten glass. A thickness at this state is referred to as an equilibrium thickness. The molten glass is drugged along the one direction into a ribbon shape so as to form a glass ribbon. In case that a desired thickness is thinner than the equilibrium thickness, there is generally applied a method of thinning the glass ribbon by extending the glass ribbon in the width direction in a manner of pressing rotating rolls, each of which has grooves and gears and is referred to as top roll (for example, see a patent document 1).

Since the glass ribbon floats on a molten metal bath, by controlling a pressing force and a direction of the top roll, and a quantity and a viscosity of the glass ribbon, it should be principally obtained a plate glass having a desired thickness which is thinner than the equilibrium thickness.

However, even if it is possible to control an overall thickness, there are locally existed microscopic asperities. Although there are considered a case that unevenness of the thickness directly generates the asperities (so-called uneven thickness) and a case that the plate totally waves while keeping the thickness constant as a cause of the microscopic asperities, the former cause is generally attributed as to the microscopic asperities. It is considered that the microscopic asperities are generated during a process of extending the glass ribbon in the width direction by means of top rolls so as to thin it.

That is to say, although a part of the glass ribbon in a line with a part extended by the top rolls tends to become thinner, a portion between the adjacent top rolls tends to become thicker so as to return the equilibrium thickness. Further, although the glass ribbon itself moves in the direction perpendicular to the width direction, the top rolls do not move. Accordingly, the extended portion of the glass ribbon extended by the top rolls moves every second in view of the glass ribbon. That is, it is easily understood that the glass ribbon receives a complex stress, which changes every second and which generates micro deformations thereby and thickness unevenness due to the deformations.

There has been tried to solve such thickness unevenness. For example, on the assumption that the reason thereof is that the tension is applied at portions at which the top rolls are separately disposed, there has been proposed that the tension is continuously applied along the end portions of the glass ribbon, instead of the top rolls (for example, see a patent document 2). However, this could not completely eliminate the thickness unevenness finally. It seems that since the glass ribbon moves toward the downstream side, the tension is not parallel with the width direction and is forcibly put in a slightly inclined direction toward the advancing direction, and therefore, the tension cannot function to equivalently extend the glass ribbon.

Further, there has been a proposal that although the end portions of the glass ribbon receiving the tension of the top rolls have the roll traces and are not used as a product, by increasing the thickness at the end portion to about 3 mm or less with respect to the thickness from 0.1 through 1.5 mm of the central portion and by increasing the width, the stress-strain is eased and the asperities of the glass surface are decreased (for example, see a patent document 3).

The thickness unevenness becomes negligible in some use by deceasing it to a predetermined degree. For example, in case of window glasses for buildings and vehicles, by decreasing it to a degree that a transmission image through a glass is not distorted to the naked eye, there is nothing wrong. However, in recent years, the demand as to the quality in the electronic engineering use such as PDP substrate, liquid crystal substrate, solar cell substrate and the like have become increasingly severe. Therefore, it becomes difficult to obtain the product getting through this grade only using known art. Although there is known a technique for polishing the glass surface on the presumption that there are existed asperities on the glass surface, this apparently increases the cost of a product.
Under such a condition, there has been desired a method which is capable of easily obtaining a plate glass having no microscopic thickness unevenness.
Patent document 1: Japanese Examined Patent Application Publication No. (Showa) 44-23823
Patent document 2: Japanese Examined Patent Application Publication No. (Showa) 49-5206
Patent document 3: Japanese Published Patent Application No (Heisei) 7-10569

### SUMMARY OF INVENTION

For example, although information described in the Japanese Examined Patent Application No. (Showa) 49-5206 is adaptable to decreasing the controversial thickness unevenness, it is difficult to decrease them so as to satisfy the quality demand of the electronic engineering use. The reason thereof is that the tension does not function to equivalently extend the glass ribbon as discussed above. Further, since it is necessary to apply different forces to the respective tension applying points on a continuous line, it is difficult to actually control such application. Further, in case that such an apparatus for continuously applying forces is introduced, a window for monitoring a floating state of the glass ribbon is closed thereby and therefore the monitoring is prevented. Further, there has become a possibility that the temperature in the vicinity of both end portions of the glass ribbon is lowered and therefore the glass ribbon tends to be broken in a slow cooling furnace.

Further, an apparatus described in the Japanese Published Patent Application No. (Heisei) 7-10569 is arranged to solve the microscopic asperities by increasing a thickness at end portions of the glass ribbon to be thicker than that of the central portion and to be thinner than about 3 mm and by increasing the width, the stress-strain is eased so as to solve the microscopic asperities. However, since the end portions do not used as products, a part for the product is decreased as the width is increased. That is, there is a problem that the quantity of the products decreases as it is aimed to manufacture better products. Further, if the thickness at the end portion becomes largely different from the thickness at the central portion, the difference of the heat capacities is certainly generated. Therefore, there is caused a possibility that the glass ribbon tends to be easily broken in the slow cooling furnace and that the heat strain at this part functions as a cause of new asperities. Further, since this method is arranged to ease the strain, it is considered that although it is effective to a whole wave of the plate glass due to the strain, it is not always effective to the plate thickness unevenness (uneven thickness) due to the deviation of the material.

Thus, it is incapable of saying that there has been developed a method of easily obtaining thickness-unevenness-less plate glass which satisfies the recent quality demand.

According to the present invention, there is proposed a method of manufacturing float glass, which is characterized in that in a method of manufacturing float glass of a thickness from 0.1 to 3 mm, during a process of controlling a width of a glass ribbon by means of top rolls, a viscosity of the glass ribbon located at a position where the width of the glass ribbon becomes maximal ranges from 4.5 to 5. 6 inclusive, and regarding at least three top rolls located downstream of the position where the width of the glass ribbon 1 becomes maximal, when a distance (unit: mm) between adjacent two top rolls 2 is L and when a variation (unit: mm) of the width directional end portion of the glass ribbon to the central direction of the glass ribbon, at the portion where the tension of the two top rolls is applied, is Δh, -0.1 ≤ Δh/L ≤ 0.4 is established.

### BRIEF DESCRIPTION OF DRAWINGS

[Fig. 1] It is a horizontal cross-sectional view of an apparatus for carrying out the present invention.
[Fig. 2] It is an enlarged cross-sectional view of a top roll.
[Fig. 3] It is an enlarged view of an end portion of a glass ribbon in Fig. 1.
[Fig. 4] It is a partially extracted view of Fig. 3, for explaining a change of a shape of the glass ribbon end portion due to the top roll.
[Fig. 5] It is a view similar to Fig. 4, in case that a tension of the top roll is differentiated.

### DETAILED DESCRIPTION

The present invention is applicable to a field of a plate glass conventionally utilized in window glasses for buildings and window glasses for vehicles, and particularly to a field of electronic material requiring a smoothness of a surface for PDP substrate, crystalline substrate and solar battery substrate and the like.

According to the present invention, it becomes possible to obtain a float glass, which has extremely little thickness unevenness and which is applicable to a use in the electronic engineering of PDP substrate, crystalline substrate and solar battery substrate and the like. Further, it is possible to manufacture float glass under a stable operation, while improving the quality and the yield of the float glass, without largely changing an operating condition and a plate manufacturing condition of an actual ceramic industry in a float method and without preparing new equipment.

The present invention is for obtaining float glass having less thickness unevenness, by defining the viscosity of the glass ribbon at a time when a width of the glass ribbon becomes maximal during a glass manufacturing process, a shape of the glass ribbon, and a top roll condition for controlling the shape.

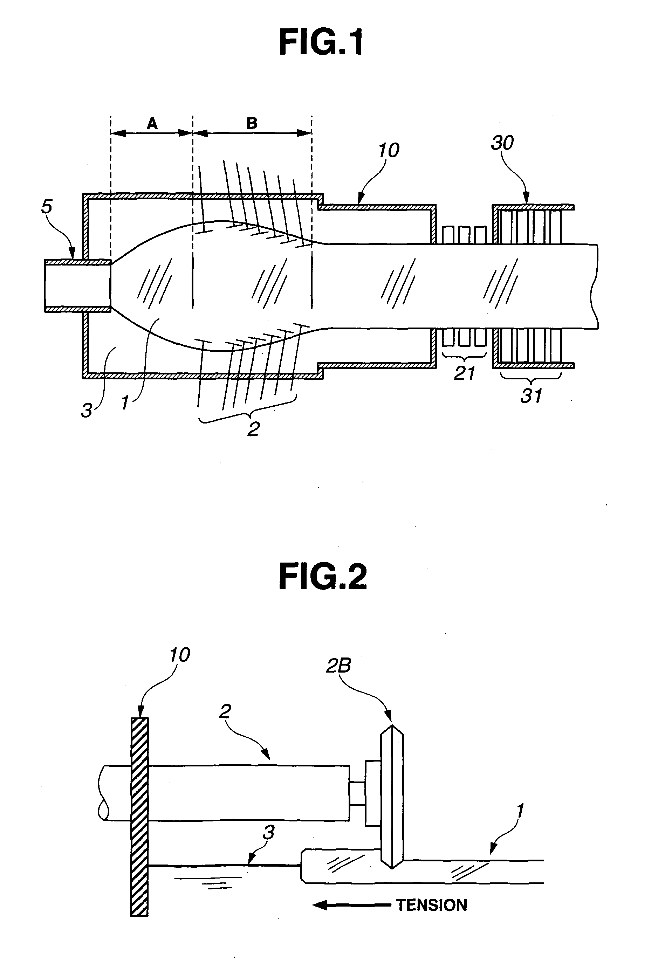

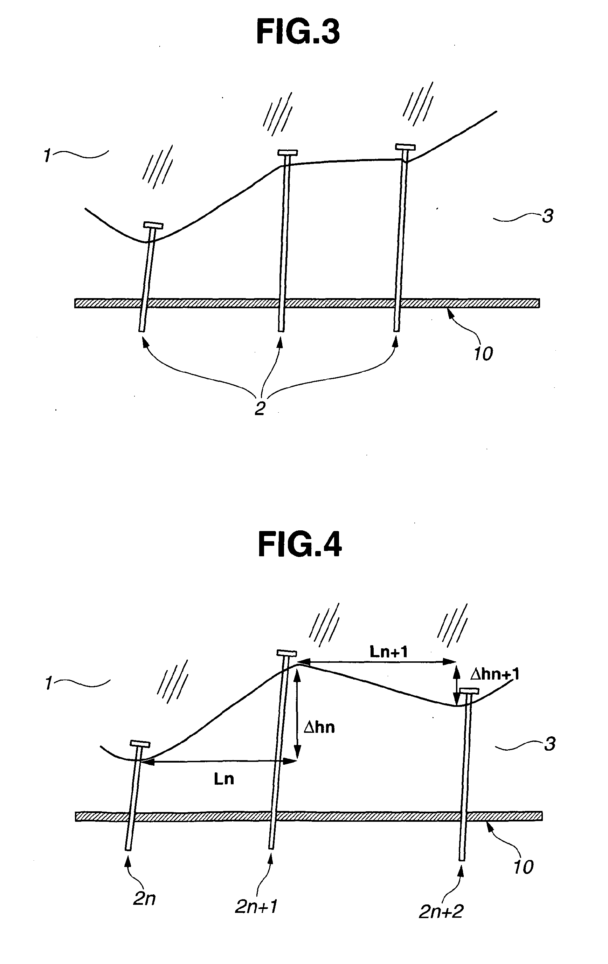

Hereinafter, there is explained the invention on the basis of the drawings. Fig. 1 is a horizontal cross-sectional view of a float glass manufacturing apparatus for carrying out the present invention, Fig. 2 is an enlarged view of a top roll shown in Fig. 1 as viewed from the lateral side, Fig. 3 is an enlarged view of a part of the top roll of Fig. 1, and Fig. 4 and Fig. 5 show a shape of an end portion of the glass ribbon.

As shown in Fig. 1, glass material is supplied from a material slot 5 onto a molten metal bath 3 in a fusion furnace 10 and is melted. The melted molten glass forms a pool of glass, which has a thickness near the equilibrium thickness at a high temperature range A, and is formed into a glass ribbon 1. The glass ribbon 1 goes ahead toward a slow cooling furnace located at the right hand side by means of a lift out roll 21, and a slow cooling roll 31 in a slow cooling furnace 30. The temperature range is also changed to a range B, which is slightly lower than the range A. The range B is a section in which the top rolls 2 exist. 5 through 25 pairs of top rolls are arranged so that the number, the direction, a pressure of pressing the glass ribbon and a speed of the respective top rollers are variable. In case of obtaining a glass ribbon having a thickness thinner than the equilibrium thickness, the glass ribbon is extended. Therefore, rotation shafts of each pair of the top rolls are arranged so as to be slightly inclined in the advancing direction of the glass ribbon 1.

Each top roll 2 applies a tension directing in the width direction to the glass ribbon 1 by pressing an end portion of the glass ribbon by means of the teeth portion 2B thereof, as shown in Fig. 2. By suppressing width shrinkage of the glass ribbon 1, the thickness of the glass ribbon 1 is controlled.

The glass ribbon 1 is firstly extended in the width direction by the top rolls located at the upstream side until passing through the range B. Then, the glass ribbon 1 is shaped by being slowly pressed and shrank while forming a center portion of the glass ribbon 1 into a shape having a target thickness. At this moment, it is important to control the viscosity and the shape of the glass ribbon 1.

That is to say, the viscosity at a position where the glass ribbon 1 starts being pressed and shrank, that is, a range of the viscosity (unit: poise) at a position where the width of the glass ribbon 1 becomes maximal, is set from 4.5 to 5.6 inclusive.

In case that the viscosity at the position where the width of the glass ribbon 1 becomes maximal is low, the thickness unevenness of the glass ribbon 1 and seams due to the tension of the top roll 2, which have once generated, naturally disappear due to the gravity. However, when the viscosity (unit: poise) becomes greater than 5.6, they are not completely disappeared and tend to be remained. Inversely, when the viscosity becomes smaller than 4.5, although it is advantageous in view that the thickness unevenness of the glass ribbon 1 and seams due to the tension of the top roll, which have once generated, naturally disappear due to the gravity, the tension due to the top roll 2 tends to become inoperative, and it becomes difficult to control the thickness of the glass ribbon 1. Therefore, it is preferable that the range of the viscosity at a position where the width of the glass ribbon 1 becomes maximal, is set from 4.5 to 5.6 inclusive. Further, from the viewpoint of manufacturing a plate from the glass ribbon, when the viscosity at the moment when the width of the glass ribbon 1 becomes maximal becomes greater than 5.6, it becomes difficult to decrease the viscosity at a section B which follows the plate manufacturing range and in which the top rolls 2 exist, and therefore the manufacture of the plate becomes difficult. Accordingly, the range of the viscosity at the moment when the width of the glass ribbon 1 becomes maximal is set from 4.5 to 5.6 inclusive.

The following is a method for setting the viscosity of the glass ribbon 1 at the above-defined viscosity. For example, in case the viscosity is lowered, alkali component in the glass material components is increased, or a temperature in the vicinity of the range B where the top rolls 2 exist is increased. For example, in case that the viscosity is increased, the alkali component in the glass material components is decreased, or the temperature in the vicinity of the range B where the top rolls 2 exist is decreased.

Both width directional end portions of the glass ribbon 1 are formed into a shape shown in Fig. 3, from the cause of the tension of the top rolls 2. It is important to define this shape into the following specific shape. That is, regarding at least three pairs of the top rolls 2 located downstream of the position where the width of the glass ribbon 1 becomes maximal, when a distance (unit: mm) between adjacent two top rolls 2 is L and when a variation (unit: mm) of the width directional end portion of the glass ribbon 1 to the central direction of the glass ribbon 1, at the portion where the tension of the two sets of the top rolls 2 is applied, is Δh, it is preferable that -0.1≤ Δh/L ≤0.4. The reason thereof is as follows.

Although Δh/L corresponds to the tension which one top roll 2 applies to the glass ribbon, the value smaller than -0.1 excessively enlarges the pressing force which is required per one top roll 2 to apply the tension to the glass ribbon 1. As a result, a mark of the top roll 2 is largely remained on the glass ribbon 1. Further, asperities are generated on the surface of the glass ribbon 1 and thereby generating the variation of the thickness thereof. Further, although it is possible to decrease the tension of each one set to the glass ribbon by increasing the number of the top rolls 2, the control thereof becomes difficult and has a limit.

When the value becomes greater than 0.4, the pressing force applied by one top roll 2 is decreased. However, a difference of the asperities in the ribbon shape becomes large and an uneven thickness thereof becomes large. Accordingly, the value is set such that -0.1 ≤ Δh/L ≤ 0.4.

It is possible to control the value within this range by adjusting the direction, the pressing force and the rotation speed of each of the top rolls 2.

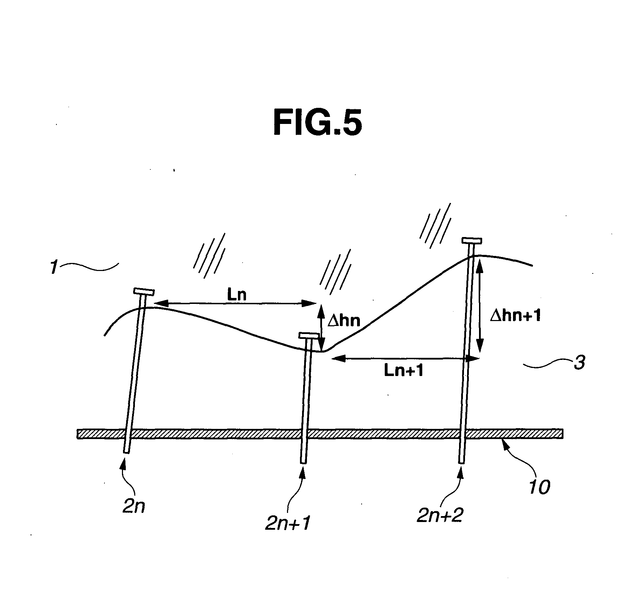

As shown in Fig. 4 and Fig. 5, regarding al least three sets of the top rolls 2 located downstream of the position where the width of the glass ribbon 1 becomes maximal, when a distance (unit: mm) between the adjacent nth top roll 2ₙ and the adjacent n+1th top roll 2ₙ₊₁ ordered toward the downstream side is Lₙ, and when a variation (unit: mm) of the width directional end portion of the glass ribbon 1 to the central direction of the glass ribbon 1, at the portion where the tensions of the two top rolls 2ₙ and 2ₙ₊₁ are applied, is Δhₙ, and further when a distance (unit: mm) between the adjacent n+1th top roll 2ₙ₊₁ and n+2th top roll 2ₙ₊₂ ordered toward the downstream side is Lₙ₊₁, and when a variation of the width directional end portion of the glass ribbon 1 to the central direction of the glass ribbon 1, at the portion where the tension of the two top rolls 2ₙ₊₁ and 2ₙ₊₂ is applied, is Δhₙ₊₁, it is preferable that -0.5≤ Δhₙ/Lₙ-(Δhₙ₊₁/Lₙ₊₁) ≤ 0.5. The reason thereof is as follows.

Although Δhₙ/Lₙ-(Δhₙ₊₁)/Lₙ₊₁) represents a difference of the variations of the width directional end portions toward the central direction of the glass ribbon 1 due to the adjacent nth and n+1th top roll 2ₙ and 2ₙ₊₁, in case that the value is positive as shown in Fig. 4, the tension of the n+1th top roll 2ₙ₊₁ to the glass ribbon functions to press and shrink the glass ribbon 1 as compared with the tensions of the nth top roll 2ₙ and the n+2th top roll 2ₙ₊₂. In case that the value is negative as shown in Fig. 5, it inversely functions to extend the glass ribbon 1. If the value becomes out of the above-mentioned range, the pressing force of the n+1th top roll 2ₙ₊₁ becomes excessively large and tends to generate linear creases starting from the positions of these top rolls 2 on the surface of the glass ribbon 1. The remaining of the large traces of the top rolls 2 on the glass ribbon 1 results in the loss of the flatness at the central portion of the glass ribbon 1. Accordingly, the value was set such that -0.5≤ Δhₙ/Lₙ-(Δhₙ₊₁/Lₙ₊₁) ≤ 0.5.

As a method of controlling the value within the above-discussed range, there is proposed to control the direction, the pressing force and the rotation speed of the top roll 2 or to control the distance between the top rolls 2 and the number of the top rolls 2.

It is preferable that the number of pairs of the top rolls 2 is from 5 pairs to 25 pairs inclusive. The reason thereof is as follows.

If the number of the pairs of the top rolls 2 becomes smaller than or equal to 4 pairs, the pressing force of the top roll 2 per each pair, necessary for applying the tension to the glass ribbon 1 becomes excessively large. As a result the large traces of the top rolls 2 remain and the flatness of the glass ribbon is lost. Further as discussed above, Δh/L becomes large under a condition that a distance (unit: mm) between the adjacent two top rolls 2 is L, and that a variation (unit: mm) of the width directional end portion of the glass ribbon 1 to the central direction of the glass ribbon 1, at the portion where the tension of the two sets of the top rolls 2 is applied, is Δh. Therefore it becomes difficult to keep it within the preferable range. Inversely, if the number of the pairs of the top rolls 2 becomes greater than or equal to 30 pairs, the temperature in the vicinity of the end portions of the glass ribbon 1, which are contacted with the top rolls 2, is lowered. This remains the thermal strain in the glass ribbon 2, and increases the tendency of generating a large wave of the glass itself and breakage of the glass ribbon 1 in the slow cooling furnace. Further, since the top rolls 2 interfere with a window for monitoring the glass ribbon 1, it degrades the workability. Accordingly, the number of the top rolls 2 is set from 5 pairs to 25 pairs inclusive.

The present invention is effective for microscopic thickness unevenness of float glass, and particularly aimed to satisfy the demand in quality of the lately electronic engineering use. Additionally, due to the above-mentioned means, it is possible to obtain a float glass in which a difference between the maximum thickness and the minimum thickness is 5 µm or less in measured value of an ultrasonic high-accuracy thickness meter.

Further, a composition of the float glass used in the method of the present invention includes material having a range of 67-73 of SiO₂, 1-3 of Al₂O₃, 7-10 of CaO, 3-5 of MgO, 12-14 of Na₂O, 0.3-1.5 of K₂O and 0.05-0.2 Fe₂O₃, specified by weight percentages, which is a general-purpose soda lime composition used in building windows and in a liquid crystal substrate. In case of this composition, the viscosity (unit: poise) under the temperature from 800 to 950 °C ranges from 4.5 to 6.5. By controlling the temperature at the same temperature range in the float bath, it becomes possible to obtain the float glass, which has extremely little thickness unevenness.

Further, a float glass composition used in the method of the present invention may include material having a range of 53-65 of SiO, 0-10.5 of BaO, 2-10 of Al₂O₃, 2-10 of CaO, 1-8 of MgO, 1-8 of Na2O, 5-10 of K₂O, and 0.3-5 of ZrO₂, represented by weight percentages, which is the glass composition used in PDP substrate and the like. In case of this composition, the viscosity (unit: poise) under the temperature from 900 to 1100 °C ranges from 4.5 to 6.5. By controlling the temperature at the same temperature range in the float bath, it becomes possible to obtain the float glass, which has extremely little thickness unevenness.

The following non-limited example exemplifies the present invention.

### EXAMPLE 1

By introducing molten glass into a melted metal bath of about 50 m in length, which has being constructed such that the cooled ribbon has about 4 m in width, a glass ribbon is formed on the molten metal. The employed top roll is a general use set which has a rotation gear made of heat-resistance and corrosion-resistance alloy. In manufacturing the glass ribbon, as to samples 1 through 10, by controlling the advancing speed, the pressing force of the top roll, the lateral position and the number of the top rolls, and the temperature and the viscosity of the glass ribbon near the area in which the top rolls exist according to the conditions shown in TABLE 1, the shape of the glass ribbons were controlled.

The glass composition is a general-purpose soda lime composition used in building windows and in a liquid crystal substrate, and is represented by 71% of SiO₂, 2% of Al₂O₃, 9% of CaO, 4% of MgO, 13% of Na₂O and 1% of K₂O of weight percentages.

In TABLE 1, there were shown a set thickness (unit: mm) at a central portion; a viscosity (unit: poise) at a part where the glass ribbon has the maximum width, Δh/L under a condition that a distance (unit: mm) between the top rolls is L and a variation (unit: mm) of the width directional end portion of the glass ribbon to the central direction of the glass ribbon is Δh; Δhₙ/Lₙ-(Δhₙ₊₁/Lₙ₊₁) under a condition that a variation (unit: mm) of the width directional end portion of the glass ribbon 1 to the central direction of the glass ribbon 1, at the portion where the tension of the two top rolls 2ₙ and 2ₙ₊₁ is applied, is Δhₙ, and a distance (unit: mm) between adjacent the n+1th top roll 2ₙ₊₁ and the n+2th top roll 2ₙ₊₂ ordered toward the downstream side is Lₙ₊₁, and when a variation (unit: mm) of the width directional end portion of the glass ribbon 1 to the central direction of the glass ribbon 1, at the portion where the tension of the two top rolls 2ₙ₊₁ and 2ₙ₊₂ is applied, is Δhₙ₊₁; a number of the top rolls; and a maximum thickness unevenness (unit: µm) of a glass cut into 500 mm x 500 mm square of the central portion of the finally obtained float glass. As to the viscosity, a viscosity of the glass having the same composition was measured in an experimental laboratory, it was controlled by controlling the temperature in the molten furnace, and the controlled value was shown in TABLE 1. The measurement thereof was carried out according to ISO 7884-2:1987 (Glass - Viscosity and viscometric fixed points - Part 2:
Determination of viscosity by rotation viscometers). The thickness unevenness was a value of a difference between the maximum thickness and the minimum thickness of thickness measured at 5 inch pitches by means of an ultrasonic high-accuracy thickness meter (MODEL25DL of Japan Panametrics Co., Ltd.).

### (COMPARATIVE EXAMPLE 1)

Except that Δhₙ/Lₙ-(Δhₙ₊₁/Lₙ₊₁) and the number of the top rolls are different from those of Example 1, the float glass was manufactured with the same manner of Example, and the measurements as same as those of measured with of EXAMPLE 1 were carried out. The results thereof were shown in TABLE 2.

**[TABLE 1]**

| | Set thickness | Viscosity | Δh/L | Δhₙ/Lₙ -Δhₙ₊₁/Lₙ₊₁ | Number of top rolls | Thickness unevenness |
|---|---|---|---|---|---|---|
| | (mm) | (poise) | | | (pair) | (µm) |
| 1 | 2.8 | 5.3 | 0.1~0.3 | 0.0∼0.3 | 10 | 4 |
| 2 | 2.8 | 5.1 | 0.0~0.3 | 0.0∼0.3 | 10 | 4 |
| 3 | 2.3 | 5.3 | 0.1~0.3 | 0.0∼0.3 | 10 | 3 |
| 4 | 2.3 | 5.1 | 0.0~0.3 | 0.0∼0.2 | 10 | 4 |
| 5 | 1.8 | 5.3 | 0.0~0.3 | 0.0∼0.2 | 10 | 3 |
| 6 | 1.8 | 5.1 | 0.0~0.3 | 0.0∼0.3 | 10 | 4 |
| 7 | 1.0 | 5.1 | 0.0~0.3 | 0.0∼0.2 | 15 | 4 |
| 8 | 1.0 | 5.0 | 0.0~0.3 | -0.1~0.2 | 15 | 4 |
| 9 | 0.5 | 5.1 | -0.1~0.3 | -0.1~0.3 | 24 | 5 |
| 10 | 0.5 | 5.0 | -0.1~0.3 | -0.1~0.4 | 20 | 5 |

**[TABLE 2]**

| | Set thickness | Viscosity | Δh/L | Δhₙ/Lₙ -Δhₙ₊₁/Lₙ₊₁ | Number of top rolls | Thickness unevenness |
|---|---|---|---|---|---|---|
| | (mm) | (poise) | | | (pair) | (µm) |
| 1 | 2.8 | 5.3 | 0.1~0.5 | 0.0∼0.3 | 10 | 7 |
| 2 | 2.8 | 5.1 | -0.1~0.5 | -0.1~0.6 | 10 | 7 |
| 3 | 2.3 | 5.3 | 0.1~0.5 | 0.0∼0.3 | 10 | 8 |
| 4 | 2.3 | 5.1 | -0.2∼0.5 | -0.5∼0.6 | 10 | 6 |
| 5 | 1.8 | 5.3 | -0.2∼0.5 | 0.0∼0.6 | 10 | 7 |
| 6 | 1.8 | 4.4 | 0.0∼0.3 | 0.0∼0.2 | 10 | 7 |
| 7 | 1.0 | 5.1 | -0.2∼0.5 | 0.0∼0.6 | 15 | 9 |
| 8 | 1.0 | 5.0 | -0.2∼0.3 | -0.1~0.2 | 15 | 8 |
| 9 | 0.5 | 5.7 | -0.1~0.2 | -0.1~0.2 | 27 | 12 |
| 10 | 0.5 | 5.0 | -0.2∼0.2 | -0.1~0.3 | 29 | 15 |

### EXAMPLE 2

The employed glass composition was a composition for liquid crystal substrate, PDP substrate, and thin-film transistor. The employed composition is represented by 54 % of SiO2, 10 % of BaO, 9 % of A₁₂O₃, 8 % of CaO, 3 % of MgO, 4 % of Na₂O, 9 % of K₂O, and 4% of ZrO₂, which were represented by weight percentages.

In forming the glass ribbon, the shape of the glass ribbon was controlled by controlling the advancing speed, the pressing force of the top rolls, the width directional positions and the number of the top rolls, the temperature and the viscosity of the glass ribbon located near the top roll existing area.

The sample of a plate glass cut out from the cooled ribbon was evaluated with the same method of EXAMPLE 1. The results thereof are shown in TABLE 3.

### (COMPARATIVE EXAMPLE 2)

Except that Δhₙ/Lₙ-(Δhₙ₊₁/Lₙ₊₁) and the number of the top rolls were different from those of EXAMPLE 2, the float glass was manufactured with the same manner of EXAMPLE 2, and the measurements as same as those of measured with of EXAMPLE 2 were carried out. The results thereof were shown in TABLE 4.

**[TABLE 3]**

| | Set Thickness | Viscosity | Δh/L | Δhₙ/Lₙ -Δhₙ₊₁/Lₙ₊₁ | Number of top rolls | Thickness unevenness |
|---|---|---|---|---|---|---|
| | (mm) | (poise) | | | (pair) | (µm) |
| 1 | 2.8 | 5.2 | 0.1~0.3 | 0.0∼0.3 | 10 | 3 |
| 2 | 2.8 | 5.0 | 0.0~0.3 | 0.0∼0.3 | 10 | 4 |
| 3 | 2.3 | 5.2 | 0.1~0.3 | 0.0∼0.3 | 10 | 4 |
| 4 | 2.3 | 5.0 | 0.0~0.3 | 0.0∼0.2 | 10 | 4 |
| 5 | 1.8 | 5.2 | 0.0~0.3 | 0.0∼0.2 | 10 | 3 |
| 6 | 1.8 | 5.0 | 0.0~0.3 | 0.0∼0.3 | 10 | 4 |
| 7 | 1.0 | 5.2 | 0.0~0.3 | 0.0∼0.2 | 15 | 4 |
| 8 | 1.0 | 5.0 | 0.0~0.3 | -0.0∼0.2 | 15 | 4 |

**[TABLE 4]**

| | Set thickness | Viscosity | Δh/L | Δhₙ/Lₙ -Δhₙ₊₁/Lₙ₊₁ | Number of top rolls | Thickness unevenness |
|---|---|---|---|---|---|---|
| | (mm) | (poise) | | | (pair) | (µm) |
| 1 | 2.8 | 5.2 | -0.2∼0.3 | 0.0∼0.3 | 10 | (crack) |
| 2 | 2.8 | 5.0 | -0.2~0.4 | -0.1~0.6 | 10 | 8 |
| 3 | 2.3 | 5.7 | -0.1~0.3 | -0.1~0.3 | 10 | 7 |
| 4 | 2.3 | 5.0 | -0.2~0.5 | -0.5-0.6 | 10 | (crack) |
| 5 | 1.8 | 5.2 | -0.2~0.5 | -0.1~0.6 | 10 | 8 |
| 6 | 1.8 | 4.4 | -0.1~0.4 | -0.1~0.5 | 10 | 8 |
| 7 | 1.0 | 5.2 | -0.2∼0.5 | -0.1~0.6 | 15 | 10 |
| 8 | 1.0 | 5.0 | -0.2∼0.4 | -0.1~0.4 | 15 | 9 |

As is apparent from each EXAMPLE, there is manufactured a float glass, whose surface has extremely little thickness unevenness such that the thickness unevenness of 500 mm × 500 mm square is 5 µm or less.

## Claims

1. In a method of manufacturing float glass of a thickness from 0.1 to 3 mm, the method of manufacturing the float glass **characterized in that** during a process of controlling a width of a glass ribbon by means of top rolls, a viscosity of the glass ribbon located at a position where the width of the glass ribbon becomes maximal ranges from 4. 5 to 5. 6 inclusive, and regarding at least three top rolls located downstream of the position where the width of the glass ribbon becomes maximal, when a distance (unit: mm) between adjacent two top rolls is L and when a variation (unit: mm) of the width directional end portion of the glass ribbon to the central direction of the glass ribbon, at the portion where the tension of the two top rolls is applied, is Δh, -0.1≤ Δh/L≤ 0.4 is established.

2. A method of manufacturing float glass as claimed in claim 1, **characterized in that** regarding al least three top rolls located downstream of the position where the width of the glass ribbon becomes maximal, when a distance (unit: mm) between the adjacent nth top roll and n+1th top roll ordered toward the downstream side is Lₙ, and when a variation (unit: mm) of the width directional end portion of the glass ribbon to the central direction of the glass ribbon, at the portion where the tensions of the two top rolls are applied, is Δhₙ, and further when a distance (unit: mm) between the adjacent n+1th top roll and n+2th top roll ordered toward the downstream side is Lₙ₊₁, and when a variation of the width directional end portion of the glass ribbon to the central direction of the glass ribbon, at the portion where the tension of the two top rolls is applied, is Δhₙ₊₁,-0.5≤ Δhₙ/Lₙ-(Δhₙ₊₁)/Lₙ₊₁) ≤ 0.5 is established.

3. A method of manufacturing float glass as claimed in one of claims 1 and 2, wherein the number of the top rolls ranges from 5 pairs to 25 pairs inclusive.
